# EUROPEAN PATENT APPLICATION

(11) **EP 1 868 130 A2**
(43) Date of publication of application: **19.12.2007**
(21) Application number: 07252296.4
(22) Date of filing: 07.06.2007
(51) Int. Cl.: G06F 21/00

(54) **Version compliance system**

(30) Priority: 12.06.2006 US 804490 P
(71) Applicant: Insight Direct USA, Inc., Tempe, AZ 85283 (US)
(72) Inventor: Vaughan, Michael J., Newton Massachusetts 02466 (US); Jacobs, Erich K., Lexington Massachusetts 02421 (US); Brusseau, Craig S., White Horse Beach Massachusetts 02381 (US); Dumont, Norman J., Fall River Massachusetts 02720 (US); Penney, Bruce D., Arlington Massachusetts 02476 (US); Covino, John M., Westborough Massachusetts 01581 (US)
(74) Representative: Jones, Keith William

(57) **Abstract**

Embodiments relate generally to ensuring version compliance for software products used within an enterprise. Generally, compliance is checked by comparing the number of actual uses of each product version to license information relating to product versions. An enterprise is compliant if use of a product version is covered by a license. License information and actual usage information are generally collected to allow for such a comparison. Information concerning license attributes such as downgrade coverage and/or license type may allow for a more accurate determination of the number of each product version ultimately available. Additionally, a rollup procedure may be used to apply updates to base licenses. Version compliance may be performed as a stand-alone feature, or it may be used in conjunction with an entitlement coordination framework to manage usage throughout the enterprise.

## Description

### CROSS-REFERENCE TO RELATED APPLICATIONS

The present application claims the benefit under 35 U.S.C. § 119 of U.S. provisional application Serial No. 60/804,490 filed June 12, 2006 and entitled "Time Bound Enablement Framework for Digital Content Distribution," and also claims the benefit under 35 U.S.C. §120 of U.S. Utility Application Serial No. 11/426,902 filed June 27, 2006 and entitled "Time Bound Entitlement for Digital Content Distribution Framework," both of which are hereby incorporated herein by reference for all purposes.

### STATEMENT REGARDING FEDERALLY SPONSORED RESEARCH OR DEVELOPMENT

**Not applicable.**

### REFERENCE TO A MICROFICHE APPENDIX

Not applicable.

### FIELD OF THE INVENTION

Disclosed embodiments relate generally to managing software products within an enterprise, and more specifically to systems and methods for verifying that the enterprise is only using versions of the software products that are covered by the enterprise's software licenses.

### BACKGROUND

As businesses become more dependent upon computerization, there is an increased need to effectively manage assorted software products deployed and used throughout each enterprise's computer system to ensure that only licensed usage is occurring. Unfortunately, this can be a difficult task. Enterprises commonly use many different software products from a wide assortment of vendors, such as software publishers, for example. Each vendor typically has its own set of licensing agreements, each with different terms and attributes. Furthermore, each software product tends to be regularly changed and/or improved by the vendor, with newly updated versions incorporating changes and/or improvements being released as they become available. Such updates are generally released as they are developed, so that their release dates may be staggered at non-standardized times throughout the year. Moreover, enterprises often acquire licenses and implement updates on a piecemeal basis. For example, some users may still employ older versions of software products because, for instance, the older versions satisfy their needs and/or because the older versions are necessary for compatibility to access pre-existing documents or systems. On the other hand, some users may employ the updated version of the software product so as to take advantage of improvements and new features and/or to allow compatibility with other newly released products/versions, for example.

The task of managing software product/version licenses is further complicated by the variety of licensing terms available from different vendors. License types often vary from one vendor to another, and the terms and associated attributes of each license may be important in determining whether an enterprise is in compliance. By way of example, a standard single user base license from a specific vendor might specify that the enterprise has full product use rights for one user of a specific version of the software. A competitive upgrade license might provide a single user base license for a software product purchased at a reduced price from a vendor when the enterprise agrees to switch from a competitor's product. A version upgrade license might give the enterprise the right to upgrade an existing base license to allow use of a specific newer version of a software product. A general upgrade license might give the enterprise the right to upgrade an existing base license for any earlier versions of the software product to allow use of a newer product version. A maintenance license might allow the enterprise to upgrade an existing base license to give the enterprise rights to use updated versions of the product released while the maintenance period is in effect. License terms may vary, so determining if an enterprise is in compliance may depend on the license type (and/or the attributes associated with a specific license). This non-exclusive listing of typical license types is merely intended to illustrate specific representative licenses and the possible attributes that govern the scope of coverage for each specific license type, and is not intended to limit the scope of this disclosure. Persons skilled in the art field will understand alternatives and equivalents to the representative licenses, licensing terms and/or attributes, all of which are included within the scope of this disclosure.

Given the many versions and license types and/or attributes that may be offered, enterprises may have difficulty ensuring compliance. In other words, it may be difficult for an enterprise to ensure that all versions of all software products being used are covered by licenses. This management problem may be especially difficult in larger enterprises such as Fortune 500 companies, for example, since they employ so many different users and so many different versions of so many different software products. Additionally, the very nature of software products further complicates attempts to ensure compliance. In particular, it is relatively easy to copy software products and there are frequent misunderstandings regarding the various licenses covering different versions of the software products being used throughout an enterprise. Under such circumstances, enterprises may quite easily become guilty of essentially pirating software products/versions without even realizing it. Unlicensed usage of software products and/or versions may result in potentially costly legal exposure. Thus, it is important for enterprises to ensure compliance with the terms of their various licenses (in order to avoid legal exposure for breach of license and/or copyright violations, for example).

Conventionally, enterprises have attempted to check compliance by hand on a rather piecemeal basis. As a result, an enterprise may unwittingly be out of compliance, exposing the enterprise to penalties and sanctions. Alternatively, in an attempt to ensure compliance in the face of such a complex management problem, enterprises may purchase more licenses than actually needed, unnecessarily wasting valuable capital resources. Given the complexities facing many enterprises, a need exists for a more effective means of ensuring compliance.

### SUMMARY

A version compliance system generally determines compliance of software product version usage within an enterprise by comparing the number of actual uses of each product version to license information relating to those product versions. An enterprise is compliant if every use of a product version is covered by a license, and any uses of product versions that are not covered by a license would indicate noncompliance. License information generally comprising the quantity of base licenses for each product version and information on actual usage is generally collected to allow for such a comparison. Optionally, it may be useful to gather license information in addition to the number of base licenses for each product version. By way of example, information concerning license attributes such as downgrade coverage and/or license type may allow for a more accurate determination of the number of each product version ultimately available. Additionally, a rollup procedure may be used to apply updates to base licenses. Version compliance may be performed as a stand-alone feature, or it may be used in conjunction with an entitlement coordination framework to manage usage throughout the enterprise.

In one aspect, the present disclosure is directed to a method for checking version compliance comprising collecting licensing information regarding product versions available to an enterprise under license; collecting information regarding actual usage of product versions within the enterprise; and comparing actual usage information to licensing information to determine compliance; wherein the licensing information comprises the number of each product version available under license; and wherein the enterprise is in compliance if each instance of actual usage of a product version is covered by a base license. The actual usage information may comprise the number of installations of product versions within the enterprise and the number of licenses consumed within an entitlement coordination framework for the enterprise; in which case the enterprise would be in compliance if each installation and each consumed license not associated with an installation is covered by a base license. Alternatively, the actual usage information may comprise only the number of installations of product versions detected within the enterprise via an inventory scan. In another embodiment, wherein the licensing information further comprises information concerning whether each base license provides downgrade coverage, the method may further comprise using an available base license with downgrade coverage to cover usage of a prior version if necessary to achieve compliance. In still another embodiment, wherein the licensing information further comprises license attribute information indicating if a license is an upgrade, the method may further comprise aggregating all base licenses and upgrades relating to each product version; and applying each upgrade for each product version to a prior version base license. The upgrades may be applied to the lowest prior version base license available, starting from the lowest version upgrade up to the highest version upgrade. In another embodiment, wherein the licensing information further comprises designation of each license as machine or user based, the method may further comprise checking for overlapping licenses; wherein two or more user based licenses for a single user would overlap.

In another aspect, the present disclosure is directed to a computer readable media containing instructions for a processor to implement steps comprising collecting licensing information regarding product versions available to an enterprise under license; collecting information regarding actual usage of product versions within the enterprise; and comparing actual usage information to licensing information to determine compliance; wherein the licensing information comprises the number of each product version available under license; and wherein the enterprise is in compliance if each instance of actual usage of a product version is covered by a base license. In an embodiment, wherein the licensing information further comprises information concerning whether each base license provides downgrade coverage, the computer readable media may further comprise the step of using an available base license with downgrade coverage to cover usage of a prior version if necessary to achieve compliance. The actual usage information may comprise the number of installations of product versions within the enterprise and the number of licenses consumed within an entitlement coordination framework for the enterprise; such that the enterprise would be in compliance if each installation and each consumed license not associated with an installation is covered by a base license. In another embodiment, wherein the licensing information further comprises license attribute information indicating if a license is an upgrade, the computer readable media may further comprise the steps of aggregating all base licenses and upgrades relating to each product version; and applying each upgrade for each product version to a prior version base license; wherein upgrades are applied to the lowest prior version base license available, starting from the lowest version upgrade up to the highest version upgrade. In yet another embodiment, wherein the licensing information further comprises designation of each license as machine or user based, the computer readable media may further comprise the step of checking for overlapping licenses; wherein two or more user based licenses for a single user would overlap.

In still another aspect, the present disclosure is directed to a device comprising a version compliance system operable to check compliance by comparing actual usage of product versions in an enterprise to licensing information regarding product versions available to the enterprise under license; and an entitlement coordination framework operable to install product versions for actual usage in the enterprise via license consumption; wherein the licensing information comprises the number of each product version available under license; actual usage information comprises the number of installations of product versions within the enterprise and the number of licenses consumed within the entitlement coordination framework for the enterprise; and the enterprise is in compliance if each installation and each consumed license not associated with an installation is covered by a base license. In another embodiment the version compliance system comprises a rollup procedure operable to apply upgrades to prior version base licenses. In yet another embodiment, wherein the licensing information further comprises information concerning whether each base license provides downgrade coverage, the version compliance system may be operable to use an available base license with downgrade coverage to cover usage of a prior version if necessary to achieve compliance.

Embodiments of the version compliance system are described in more detail below with the aid of reference figures.

### BRIEF DESCRIPTION OF THE DRAWINGS

For a more complete understanding of the present disclosure, and for further details and advantages thereof, reference is now made to the accompanying drawings, wherein:

FIG. 1 is a flow diagram of a general version compliance system;

FIG. 2A is a representative data entry format for initially inputting license information by defining the licenses held by an enterprise and the attributes associated with each license;

FIG. 2B is a representative data entry format for editing or amending license information, which allows for updating of the licenses held by an enterprise and the attributes associated with each license;

FIG. 3 is a flow diagram of a rollup procedure that might be used to apply updates to underlying base licenses to determine the number of each version of each product that an enterprise is authorized to use under license;

FIG. 4 is a representative format showing the results of a software product compliance comparison process that checks compliance by comparing the license information to the number of installs for each product version within an enterprise;

FIG. 5 is a diagram of a representative system integrating a version compliance system within an entitlement coordination framework;

FIG. 6 is a representative format showing the results of a software product compliance comparison process that checks compliance by comparing the license information to the number of installs and the number of licenses consumed;

FIG. 7 is a representative format showing license coverage, which provides details regarding how specific licenses have been applied in an attempt to ensure compliance or minimize the number of violations; and

FIG. 8 is a representative format showing the results of a software product compliance comparison process of the sort that might be occur once an effective entitlement coordination framework is in place within an enterprise, with corresponding consumed licenses accounting for each installed product version.

### DETAILED DESCRIPTION OF THE INVENTION

A version compliance system compares the actual usage of software product versions within an enterprise to the licenses that authorize use of software product versions within an enterprise and then determines if any software product versions are being used without the proper license authority. In other words, the general goal of a version compliance system is to determine whether there are any unauthorized uses of product versions, which allows the enterprise to either confirm that it is in compliance or take steps to achieve licensing compliance.

Generally, the number of each version of software products available to an enterprise under license and the number of each version of software products actually being used within an enterprise are determined. Actual usage is then compared to licensed availability to determine if the enterprise is compliant or if there are any versions of any product being used within the enterprise without proper license coverage. This compliance analysis may allow the enterprise to take steps as necessary to ensure compliance, such as by acquiring additional licenses, for example.

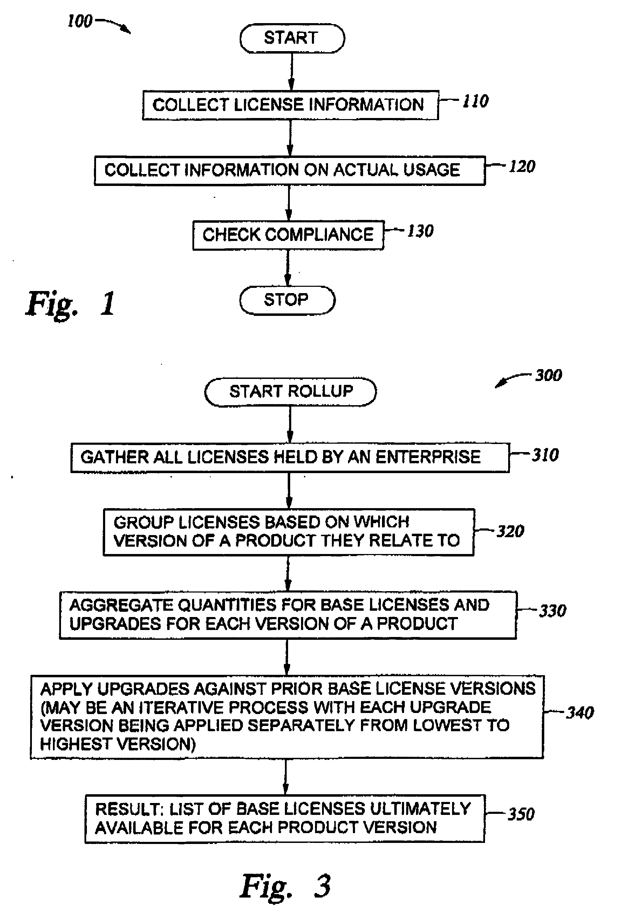

**FIGURE 1** illustrates a general version compliance system 100. At step 110, licensing information is collected to determine the licensed number of each version of each software product available to users within the enterprise. At step 120, information on actual usage of each product version throughout the enterprise is collected to determine the number of each version of each product actually being used (as for example, by download onto hardware) within the enterprise. While the illustrative example of FIGURE 1 shows the collection of actual usage data at step 120 taking place after the collection of licensing information at step 110, these functions could be performed in either sequence, or even simultaneously. Once information on both licensing 110 and actual usage 120 has been gathered, compliance may be checked at step 130 by comparing actual usage 120 to license availability 110 to determine if there are any versions of any product being used without the proper license. An enterprise is compliant if every version of every product being used within the enterprise is covered by a license. Generally compliance is checked for all versions of all products being used within the enterprise, but compliance could also be checked on a product-by-product basis to ensure that a specific software product being used within the enterprise is version compliant. For convenience, examples disclosed herein may discuss compliance with respect to only a single product, but it should be understood that a version compliance system may check compliance across multiple products and often would check compliance for all products being used by an enterprise.

At step 110, information on licenses may be collected as the licenses are acquired, or the information may be input at a later date to allow for a compliance check. Generally, information on the number of each version of each product available under license is collected. Optionally, information regarding the type of license and/or the attributes associated with each license may be collected to better determine the actual coverage of the licenses available within an enterprise. By way of providing non-exclusive examples of license attributes, it may be useful to have information on whether a license allows for use of earlier versions (also referred to as downgrade coverage), whether a license is user or machine based, and/or whether a license provides a base license that may operate independently or merely provides an upgrade that can only be effectively used in conjunction with a separate base license. Persons skilled in the art field will understand alternatives and equivalents to the representative license types and/or attributes, all of which are included within scope of this disclosure.

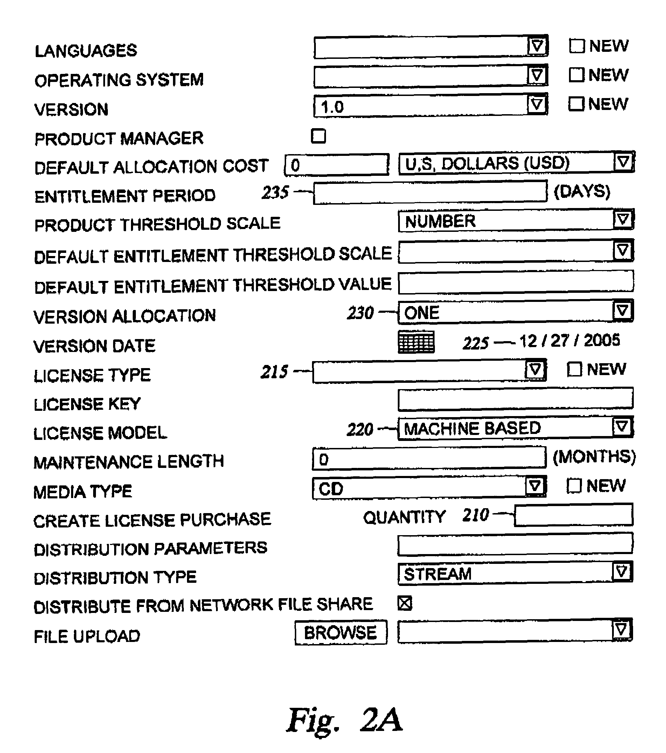

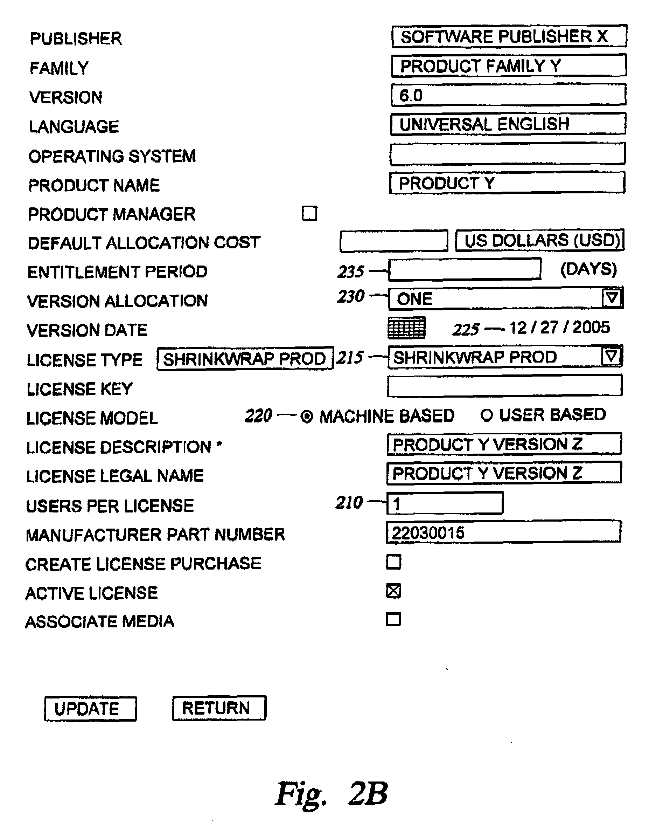

**FIGURE 2A** provides an illustrative example of a data entry format for initially inputting license information, defining the licenses held by an enterprise and the attributes associated with each license. Similarly, **FIGURE 2B** provides an illustrative example of a data entry format for editing or amending license information, allowing for updating of the licenses held by an enterprise and the attributes associated with each license. These representative data entry formats allow the user to input information concerning, for example, the number of licensed uses of a product version authorized 210, the license type 215 (which may relate to specific attributes), the license model 220 (user or machine based, for example), and/or the version date 225 to be collected for each specific version of each specific software product being used within an enterprise, so that license information is available to check compliance. Additional optional information regarding the manner of usage of licensed product versions may also be input in these representative formats. For example, the default version allocation 230 may optionally be set, specifying which version(s) of a product should be made available to users when they are entitled to a product; or an entitlement period 235 might optionally be set, specifying the duration of an entitlement for a product version. The data entry formats presented in Figures 2A and 2B are merely representative; and not all of the information shown may be collected for a specific version compliance system. Furthermore, additional license information could also be collected.

By collecting information on licenses for an enterprise, the actual coverage of a license (according to its attributes) may be used to determine the effective number of each version of a product ultimately available within the enterprise. For example, some licenses may provide downgrade coverage, allowing the license for a later version to cover use of an earlier version of a product. Other licenses may apply upgrades to pre-existing base licenses to convert the base license to cover a newer version of the product. So the attributes of each license may be useful in determining specific version coverage. Specifically, the number of each specific version of a licensed product available to users may be determined based on the number of base licenses for a particular version held by the enterprise and also based on any upgrades that may be applied, for example.

By considering the attributes of each license, which may be defined in terms of license type, a rollup procedure may be implemented to apply upgrades to base licenses. Such a rollup procedure may allow for a more accurate determination of the ultimate number of each version of a product that is covered by license and available for use within the enterprise. By applying upgrades to underlying base licenses, the number of each version of a product covered by license and ultimately available within an enterprise, as well as the attributes of the converted base licenses, may be determined in preparation for checking compliance.

A rollup procedure generally comprises gathering all of the license purchase information for an enterprise, identifying licenses related to each version for each product (typically based on license type and/or attributes) such that all licenses relating to specific product versions can be considered together, aggregating the quantities for related base licenses and upgrades, and applying upgrades against prior base license versions to determine the ultimate number of each version of each product available under license within the enterprise. While a rollup procedure would generally be performed across all products used within an enterprise, the procedure tends to operate on each product separately such that rollup could be performed for individual products or one product at a time by simply limiting the initial gathering of license information to a single product.

Rollup generally converts the information collected concerning the various licenses held by an enterprise into information on the ultimate number of each version of a product available for use within the enterprise (taking into account upgrades that might apply to allow base licenses for earlier versions to instead cover later versions of a product). In practice, the rollup procedure may serve to preliminarily place the general license information (collected in step 110 of FIGURE 1, for example) into a more useful form in preparation for checking compliance by a comparison analysis (as in step 130 of FIGURE 1).

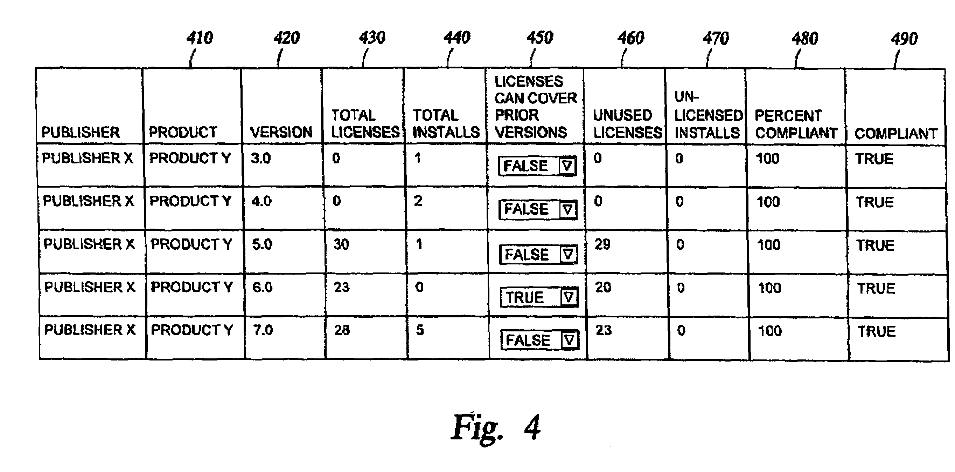

**FIGURE 3** illustrates a representative rollup process. First, information on all licenses held by an enterprise is gathered at step 310, as described above with relation to step 110 of FIGURE 1, for example. The information may be input at the time that new product versions are obtained by the enterprise, or it may be input at the time that a compliance check will be performed. At step 320, for each product, the licenses are grouped based on the particular version of a product to which they relate. Thus, all licenses of any sort relating to a specific version of a specific product are grouped together at step 320. This allows for aggregation of all underlying base licenses and upgrades relating to cach particular version of a product at step 330. By way of example, all base licenses relating to version 2.0 of a specific product would be aggregated, as would all upgrade licenses relating to version 2.0. The sums derived from this aggregation would specify the number of base licenses and upgrades that apply for a particular version of a particular software product.

At step 340, after aggregation, upgrades are applied to prior version base licenses to determine the ultimate number of each version of a product available under license within the enterprise. Generally, upgrades are applied to the lowest prior version base license available. The upgrades may be applied using an iterative process, with upgrades relating to each version generally being applied separately, from the lowest to the highest version. At step 350, the result of such a rollup procedure is a listing of updated (fully upgraded) base licenses, showing the ultimate number of each version of a product available for use within the enterprise.

An illustrative example of rollup follows. For the sake of convenience, the example considers only a single software product (designated Product Y). However, it should be understood that such a rollup procedure may easily be applied to multiple products or even to all products in use within the enterprise. The illustrative example below is based on the following hypothetical Product Y releases by Software Publisher X and product version purchases for an enterprise:

| Time Increment | Action: Product Release or License Purchase |
|---|---|
| 1 | Purchase 10 Product Y V1.0 Standard Single User Licenses |
| 2 | Purchase 5 Product Y V 1.0 Standard Single User Licenses |
| 3 | Purchase 4 Product Y V2.0 Version Upgrades |
| 4 | Purchase 6 Product Y V2.0 Competitive Upgrades |
| 5 | New Product Y V3.0 released |
| 6 | Purchase 3 Product Y General Upgrades |
| 7 | Purchase 10 Product Y Maintenance 1 year |
| 8 | New Product Y V4.0 released |

In this example, Versions 1.0 and 2.0 were previously released before the enterprise began purchasing Product Y. As the chart above illustrates, at the first time increment, the enterprise purchases ten (10) Product Y Version 1.0 Standard Single User Licenses. Later, at the second time increment, the enterprise purchases five (5) additional Standard Single User Licenses for Product Y V 1.0. At time increment 3, the enterprise purchases four (4) Product Y V2.0 Version Upgrades. Then at time increment 4, the enterprise purchases six (6) Product Y V2.0 Competitive Upgrades. A new version of Product Y, namely Version 3.0, is released at time increment 5. Later, at time increment 6, the enterprise purchases three (3) Product Y General Upgrades. At time increment 7, the enterprise purchases ten (10) Product Y One Year Maintenance Licenses. Then, another new version of Product Y, namely Version 4.0, is released at time increment 8, which is within one year of time increment 7.

In this example, which relates only to Product Y from Software Publisher X, all of the licenses held by the enterprise have been gathered for consideration according to step 310 of FIGURE 3. These licenses are then grouped at step 320 of FIGURE 3 based on which version of the product they relate to. The first two purchases relate to Version 1.0, purchases 3 and 4 relate to Version 2.0, the purchase of the general upgrade at time increment 6 relates to Version 3.0 (since according to its attributes, a general upgrade relates to the last version released prior to the purchase of the general upgrade license), and the remaining maintenance licenses are not limited to any specific version but simply ensure that if any new versions are released within one year of the maintenance license purchase, those new versions are covered by the maintenance license.

At step 330, base licenses and upgrades are then aggregated for each version. Thus, the enterprise holds fifteen (15) base licenses for Version 1.0 (by cumulating the first two purchases); four (4) upgrades to Version 2.0 based on the purchase at time increment 3; six (6) base licenses for Version 2.0 based on the Competitive Upgrades purchased at time increment 4, since a competitive upgrade is simply a new base license to an upgraded version of a product offered to an enterprise at a lower price by the vendor as an incentive for the enterprise to switch from a competitor's product to the vendor's product, and competitor upgrades do not require a separate base license; three (3) upgrades for Version 3.0 based on the purchase at time increment 6, since the general upgrades would relate to the latest release, which was Version 3.0; and ten (10) upgrades for Version 4.0 since, according to the terms, the maintenance licenses apply to any versions released within one year of purchase, and Version 4.0 was released within one year of the purchase of the maintenance licenses. Accordingly, after aggregating base licenses and upgrades at step 330 of FIGURE 3 for each version of the product, the version licenses for this example are:

| Quantity | Version | License Type |
|---|---|---|
| 15 | V1.0 | Base License |
| 4 | V2.0 | Upgrade |
| 6 | V2.0 | Base License |
| 3 | V3.0 | Upgrade |
| 10 | V4.0 | Upgrade |

At this stage of the rollup procedure, at step 340 of FIGURE 3 upgrades are applied to the base licenses to determine the ultimate quantity of each version of the product available under license within the enterprise. In this example, upgrades are applied one at a time, starting from the lowest upgrade and proceeding incrementally to the highest. Thus, the four (4) Version 2.0 upgrades from time increment 3 are applied to the underlying Version 1.0 base licenses from time increment I and/or time increment 2. As a result, four (4) of the fifteen (15) base licenses for Version 1.0 are converted to base licenses for Version 2.0, such that there are now eleven (11) Version 1.0 base licenses remaining and ten (10) total Version 2.0 base licenses. After applying the Version 2.0 upgrades, the listing appears as follows:

| Quantity | Version | License Type |
|---|---|---|
| 11 | V1.0 | Base License |
| 10 | V2.0 | Base License |
| 3 | V3.0 | Upgrade |
| 10 | V4.0 | Upgrade |

Next, the Version 3.0 upgrades are applied. While upgrades may be applied to any base license with a release date prior to the purchase date of the upgrade, upgrades are generally applied to underlying base licenses with the lowest version number. Thus, the three (3) Version 3.0 upgrades are applied to some of the remaining Version 1.0 underlying base licenses, resulting in eight (8) remaining Version 1.0 base licenses and three (3) Version 3.0 base licenses. After applying the Version 3.0 upgrades, the listing appears as follows:

| Quantity | Version | License Type |
|---|---|---|
| 8 | V1.0 | Base License |
| 10 | V2.0 | Base License |
| 3 | V3.0 | Base License |
| 10 | V4.0 | Upgrade |

Now, the Version 4.0 upgrades are applied. In this example, there are ten (10) Version 4.0 upgrades based on the maintenance licenses purchased at time increment 7. The Version 4.0 upgrades are first applied to any remaining underlying base licenses for Version 1.0, which translates the remaining eight (8) Version 1.0 base licenses to Version 4.0 base licenses. There are an insufficient number of Version 1.0 base licenses to account for all of the Version 4.0 upgrades, however. Therefore, the two (2) remaining Version 4.0 upgrades (that are left over after applying upgrades to the Version 1.0 base licenses) are applied to the Version 2.0 base licenses. Thus, after applying the Version 4.0 upgrades to the Version 1.0 and Version 2.0 base licenses, there are no remaining Version 1.0 base licenses, eight (8) Version 2.0 base licenses, and ten (10) Version 4.0 base licenses. After applying the Version 4.0 upgrades, the listing appears as follows:

| Quantity | Version | License Type |
|---|---|---|
| 8 | V2.0 | Base License |
| 3 | V3.0 | Base License |
| 10 | V4.0 | Base License |

If at some point after time increment 8, but within one year of time increment 7 when the one year Maintenance Licenses were purchased, another new version (Version 5.0 in this example) is released, then the Maintenance Licenses would stop applying to Version 4.0 and would instead apply to Version 5.0. In that case, the enterprise of this example would hold eight (8) Version 2.0 base licenses, three (3) Version 3.0 base licenses, and ten (10) Version 5.0 base licenses.

The example presented above is intended as an illustration of one representative rollup procedure only, and does not limit the scope of rollup in general. It demonstrates the manner in which rollup may generally occur, applying upgrades to underlying base licenses to determine the ultimate number of each version of a product available under license within an enterprise. In this way, rollup may be applied to collected license information to better represent the product versions ultimately available under license terms. In addition to its use within a version compliance system, rollup could be used independently in conjunction with an entitlement coordination framework to provide updated information concerning the number of base licenses available for consumption as more fully disclosed herein.

In addition to determining the number of each version of each product available under license within an enterprise, a version compliance system relies on information about the actual usage of various product versions within the enterprise to determine whether the enterprise is in compliance with its license terms. Actual product version usage may be determined before, after, or simultaneously with the determination of licensing information. In the example of FIGURE 1, at step 120 information regarding actual usage is collected after licensing information is collected at step 110 simply as a matter of convenience. Once both pieces of information have been collected, a comparison follows at step 130 to check compliance.

The number of product versions actually in use may be determined by an inventory scan. Generally, an automated inventory tool scans the computer system of the enterprise to determine the number of each version of each product installed throughout the enterprise's computer system. Alternatively, a physical review of elements of the computer system might serve as an inventory scan. Regardless, the number of product versions actually installed for use throughout the enterprise is determined during the inventory scan.

After the inventory scan, version compliance may be determined by comparing the number of each product version installed within the enterprise to the number of each product version available to the enterprise under license. **FIGURE 4** illustrates a representative format for such a compliance checking comparison for an enterprise's use of Product Y. Column 410 lists the product being considered. While the example of FIGURE 4 shows a compliance comparison for only one product, designated Product Y from Software Publisher X, other products could also be considered singly or all at once. Column 420 lists the various versions of the product available and/or used throughout the enterprise. Column 430 lists the total number of each version of the product available to the enterprise under license. This is based on the licensing information collected, as shown for example in step 110 of FIGURE 1, and may also take into account updates applied via a rollup procedure to determine the ultimate number of each version of the product available within the enterprise under license.

Column 440 lists the number of each version installed throughout the enterprise's computer system as may be determined via the inventory scan. Column 450 indicates whether licenses for one version allow for authorized use of an earlier version. This may be called downgrade coverage, and is determined based on the attributes of the licenses. If downgrade coverage applies, as it does for Version 6.0 in the example of FIGURE 4 (as indicated by the "True" in the box for this version in column 450), then those licenses may provide coverage for Version 6.0 and all earlier versions. In FIGURE 4, for example, three (3) of the base licenses for Version 6.0 are actually being used to cover the installation of Versions 3.0 and 4.0 to maintain compliance by ensuring that any software installations are covered by license. Generally, any licenses with downgrade coverage that are not needed to cover their specific version of the product covered under the license at purchase will be used to cover any otherwise unlicensed installs for previous versions of the product, thereby maintaining compliance if possible.

Column 460 lists the number of licenses not being used to cover installed software, thereby indicating the number of additional installations that may be available to users in the enterprise. Unused Licenses in column 460 generally represents the difference between Total Licenses from column 430 and Total Installs from column 440, although there may be a discrepancy if downgrade coverage is being used for earlier versions. Any earlier installations covered by a license's downgrade coverage are also deducted from Total Licenses in column 430 when determining the number of Unused Licenses in column 460. Column 470 shows the number of unlicensed installs for each version. This number generally represents the difference between Total Installs from column 440 and Total Licenses from column 430, with any negative number being represented as zero since there would be no unlicensed installs if there are more licenses than installations. Again, downgrade coverage may allow for coverage of installs even if there are insufficient licenses for a specific version, affecting the number of unlicensed installs reported in column 470.

Compliance is achieved, as indicated by a "True" in column 490, if there are no unlicensed installs, which in this example occurs if column 470 indicates zero for a particular version. In other words, there is version compliance if each installation of a product version is covered by a license. If there are any unlicensed installs, however, then version compliance would not be achieved and additional licenses may need to be acquired to ensure compliance. Compliance may also be indicated in terms of a percentage, as shown in column 480, to give some indication of the severity of noncompliance.

In the example of FIGURE 4, all versions are in compliance. Although the enterprise does not have any version-specific licenses for the single installation of Version 3.0 or the two (2) installations of Version 4.0, these installs are covered by three (3) of the licenses for Version 6.0 having downgrade coverage. This use of the downgrade coverage offered under the licenses for Version 6.0 can be seen by comparing the Total Licenses in column 430 to the Total Installs in column 440 and the Unused Licenses in column 460. In the example of FIGURE 4, Version 6.0 has 23 total licenses, and there are no installs. However, column 460 indicates that there are only 20 unused licenses for Version 6.0, since three (3) of the licenses are being used to provide downgrade coverage for Version 3.0 and Version 4.0. The installs for Version 5.0 and Version 7.0 are covered by licenses for those specific versions with additional licenses to spare, while there are no installs of Version 6.0, such that the only three (3) licenses for Version 6.0 actually being used provide downgrade coverage with additional licenses to spare.

Once a comparison of actual usage versus available base licenses has been made, compliance may be determined. If there are no unlicensed installs for a particular version of a product, then that version is in compliance. On the other hand, if there are unlicensed installs for a particular version of a product (since there are more uses of the product version than available licenses for that version), then additional licenses might need to be acquired to ensure compliance. Thus, version compliance may be used to manage product version acquisition for achieving or maintaining compliance with the terms of the enterprise's various licenses.

Rather than determining the number of each product version in actual usage in an enterprise using an inventory scan to determine actual installations of the product versions throughout the enterprise's computer system, alternative means might be employed to determine actual usage. By way of example, the number of each version of each product in actual usage might be determined using a consumption method. Typically, a consumption method would be available if an enterprise has implemented an entitlement coordination framework to control distribution of product versions to users. In that case, the number of each version of each product being consumed via the entitlement program could be used to determine actual usage. Alternatively, a consumption method might use information concerning both installations (as from an inventory scan) and license consumption (as from an entitlement coordination framework).

An entitlement coordination framework is a system that allows an administrator to specify which users may access particular products and/or versions. In concept, a central pool of entitlements representing the number of each version of each product available under license for use within the enterprise is managed by an administrator. The administrator generally determines which products and/or versions from the central pool may be allocated to each user. Users may then use those designated products/versions by a process generally called "consumption." When a user consumes an entitlement, the entitlement coordination framework indicates that one of the base licenses authorizing use of that product version is being used and is not available to provide coverage for some other usage within the enterprise. In other words, consumption of an entitlement acts to remove the entitled license (covering a specific product version) from the central pool. Generally, such an entitlement coordination framework would help to ensure compliance by preventing installation and use of any unlicensed software products and/or versions. Additional details regarding such an entitlement coordination framework are available in pending U.S. patent application Serial No. 11/426,902, fully incorporated by reference herein.

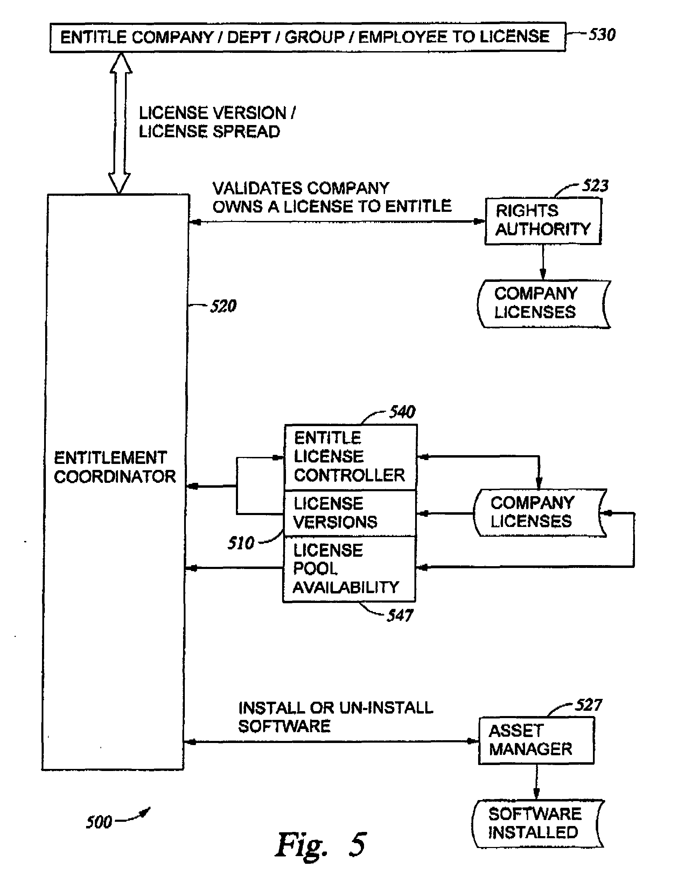

If such an entitlement coordination framework is used within an enterprise, then it may be possible to determine the actual usage of each version of each product by taking into account consumption from the available pool. Then compliance could be determined based on a comparison of the actual usage (with consideration of consumption) versus the number of uses authorized by license. Additional analyses may also be possible by considering information regarding installs versus information concerning consumption. **FIGURE 5** generally illustrates a representative integrated system comprising an entitlement coordination framework and a version compliance system, allowing for a consumption method of compliance comparison determination. Implementation of such systems may be by computer readable media containing instructions for one or more processors.

In the example of FIGURE 5, a version compliance system 510 is integrated within a general entitlement coordination framework 500. The entitlement coordinator 520 serves as the central communication hub for the entitlement coordination framework 500, linking the various components so that information can flow freely throughout the framework. The version compliance system 510 determines which product versions are available under license (based on information from the rights authority 523) and checks to ensure that all product versions actually being used within the enterprise (based on information from either the asset manager 527 and/or the entities 530 consuming entitlements) are covered by a license. The rights authority 523 generally accesses license information to determine coverage, while the asset manager 527 generally downloads, installs, and/or uninstalls software products for entities 530 throughout the enterprise, as well as tracking these actual installations.

The version compliance system 510 may optionally factor in downgrade coverage and/or use a rollup procedure to apply upgrades, so that the ultimate number of each product version available under license can be determined. The version compliance system 510 may check compliance by comparing the ultimate number of each product version available to the actual usage, which may be based on the number of installations/downloads tracked by the asset manager 527 or the number of consumptions of entitlements by entities 530 communicated via the entitlement coordinator. The version compliance system 510 of FIGURE 5 communicates the number of product versions available under license, as well as possibly communicating information regarding compliance issues, to the entitle license controller 540, so that the central pool of available licenses 547 of the entitlement coordination framework 500 may be kept up to date.

The entitle license controller 540 controls entitlement usage throughout the enterprise by determining which entities 530 may access specific product versions in the central pool 547. Generally, once the entitlement coordination framework 500 is in place within an enterprise, entities 530 (such as users) will only be able to consume/install product versions from the central pool 547 to which they have been entitled. In this way, the entitlement coordination framework 500 with integrated version compliance 510 may help ensure and maintain compliance within the enterprise, as only the number of each product version within the central pool 547 should generally be available for entitlement and consumption within the enterprise. The integrated system of FIGURE 5 is merely exemplary, and is not intended to limit the scope of version compliance in general or of an integrated system with an entitlement coordination framework having version compliance specifically. Persons skilled in the art field will understand and appreciate alternatives and equivalents, all of which are included within the scope of this disclosure.

Such a consumption method of compliance may be used to achieve compliance initially, as for example during a transition period, when an enterprise begins using an entitlement coordination framework after having already installed some software products onto its computer system. In this circumstance, the enterprise needs a way to determine compliance, even though installations may not be accounted for by corresponding license consumptions. Such a consumption method of compliance may alternatively be used to maintain compliance once the entitlement coordination framework has been fully integrated into the computer system, such that all installations are accounted for by corresponding consumed licenses. While the procedure is generally the same, the specifics may vary somewhat depending upon whether the consumption method of compliance is being used initially during a transition period to help note any inconsistencies to achieve balanced compliance as the entitlement coordination framework is implemented, or whether it is being used to maintain compliance equilibrium after full integration and implementation of the entitlement coordination framework, with all installations accounted for by corresponding consumed licenses. These distinctions will be discussed below in relation to specific examples.

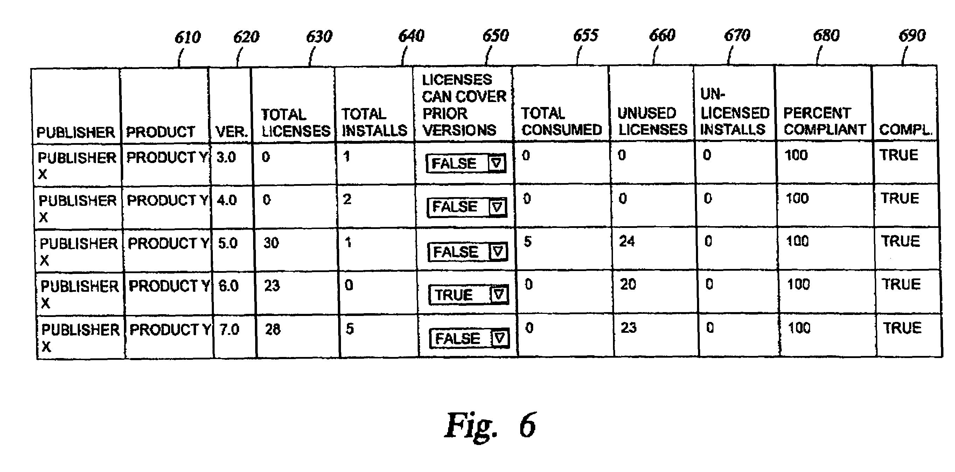

**FIGURE 6** illustrates a representative format that may be used to provide a comparison for a consumption method of checking compliance, determining compliance for an enterprise's use of Software Publisher X's Product Y in this example. FIGURE 6 demonstrates the use of a consumption method to initially check compliance based on both installations and license consumption. In this example, software products were previously installed on the enterprise's computer system prior to implementation of an entitlement coordination framework. As a result, consumed licenses may not fully account for all product versions installed on the computer system. Instead, there may be product versions installed on the computer system without any corresponding license consumption because the installations may have occurred outside of the entitlement coordination framework.

FIGURE 6 generally tracks the example of FIGURE 4, having the same number of licenses and installs as FIGURE 4, but also including information concerning consumption, which is available if the version compliance system is used in conjunction with an entitlement coordination framework. Column 610 lists the product being considered. While the example of FIGURE 6 only shows a compliance comparison for Product Y, other products could also be considered singly or all at once. Column 620 lists the various versions of the product available and/or used throughout the enterprise. Column 630 lists the total number of each version of the product available to the enterprise under license. This is based on the licensing information collected, as shown for example in step 110 of FIGURE 1, and may also take into account updates applied via a rollup procedure to determine the ultimate number of each version of the product available within the enterprise under license.

Column 640 lists the number of each version installed throughout the enterprise's computer system, as may be determined via an inventory scan. Column 650 indicates whether licenses for one version allow for authorized use of an earlier version. This downgrade coverage is determined based on the attributes of the licenses. If downgrade coverage applies, as it does for Version 6.0 in the example of FIGURE 6, then those licenses may provide coverage for the specific version to which they apply as well as all earlier versions. Generally, any licenses with downgrade coverage that are not needed to cover their specific version of the product will be used to cover any otherwise unlicensed installs for previous versions of the product, thereby maintaining compliance if possible.

Column 655 lists the total number of base licenses consumed for each version of the product. Thus, if an entitlement coordination framework is being used within an enterprise, column 655 will indicate the number of each version of a product that has been consumed from the central pool of the entitlement coordination framework. Column 660 lists the number of licenses not being used to cover installed and/or consumed software, showing the number of additional installations that may be available to users in the enterprise. The Unused Licenses of column 660 generally represent the number of licenses which remain available for use. Column 670 shows the number of unlicensed installs for each version. This number generally indicates whether there are any uses (potentially shown as installs and/or consumed licenses) for which there is not license coverage.

As indicated by a "True" in column 690, compliance is achieved if there are no unlicensed installs, namely if column 670 indicates a zero for a particular version. In other words, there is version compliance if each installation and each consumed license not associated with an installation is covered by a base license. If there are any unlicensed installs or consumptions, however, then there would not be version compliance. Compliance may also be indicated in terms of a percentage, as shown in column 680, to give some indication of the severity of any noncompliance problem.

In the specific example of FIGURE 6, all versions are in compliance. There are no base licenses covering the single installation of Version 3.0 or the two (2) installations of Version 4.0. Accordingly, these installations would not be in compliance unless downgrade coverage could be applied. If available, downgrade coverage will be used to achieve compliance. Both the single installation of Version 5.0 and the five (5) consumed licenses of Version 5.0 are covered by the base licenses available for Version 5.0 with additional licenses remaining. There are no installations or consumed licenses for Version 6.0, meaning there are 23 available base licenses remaining. Since Version 6.0 licenses are operable to provide downgrade coverage, as denoted by the "True" in column 650, three (3) of these licenses are being used to cover the installations for Versions 3.0 and 4.0, such that 20 Version 6.0 base licenses remain unused as indicated in column 660. Thus, Versions 3.0 and 4.0 are in compliance in the example of FIGURE 6 due to downgrade coverage. Finally, the five (5) installations of Version 7.0 are covered by base licenses specifically for Version 7.0 with additional licenses remaining.

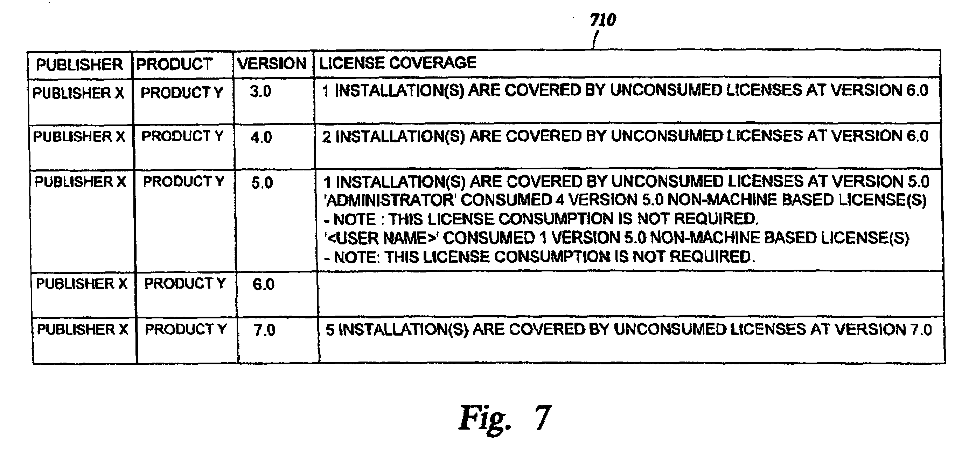

Additional details regarding license coverage may be seen in a related representative format of the type illustrated in **FIGURE 7**, which reports how license consumption from column 655 of FIGURE 6 interacts with installs from column 640 of FIGURE 6. For each version of the product, details may be provided regarding license coverage for installations, consumptions (and whether consumed licenses cover installations, whether installations are covered by unconsumed licenses, or whether installations are not covered by any license), and whether consumptions are necessary for compliance based on whether the license model is user-based or machine-based. Thus, specific details regarding the way in which license consumption and product installation interact in FIGURE 6 may be seen in the related format set forth in

### FIGURE 7.

Generally, an analysis may be performed to detail whether installations are covered by license, and if so, which specific license provides coverage (if for example, downgrade coverage applies) and whether the license covering an installation is consumed or unconsumed (indicating whether the entitlement coordination framework is accounting for installations). In the example of FIGURES 6 and 7, installations were made outside of the entitlement coordination framework, such that some installations do not have a corresponding consumed license. Additionally, it may be possible for licenses to be consumed without having been installed. This could occur, for example, if there was an installation error or licenses were uninstalled without updating the consumption information. When determining the number of remaining unused licenses, as indicated in column 660 of FIGURE 6, the number of installations (regardless of whether they are covered by consumed or unconsumed licenses) and the number of consumed licenses not associated with an installation are deducted from the total licenses available (column 630) (with any negative number being set to zero). This would be true even if downgrade coverage is being provided for an earlier installation, as the installations being covered by downgrade coverage would be deducted from the total licenses available for the higher version providing coverage.

It should also be noted that information about user (i.e. non-machine) based licenses may be used to analyze whether there is any unnecessary license consumption. This could occur, for example, if a single user has consumed multiple user based licenses, or if a user has one or more user based licenses while using a computer already covered by a machine based license. Instances of such overlap may be flagged to notify an administrator of inefficient license usage, so that additional licenses may be available for return to the central pool.

FIGURE 7 specifically indicates in column 710 how licenses are consumed and/or installed. The specific example of FIGURE 7, which relates details regarding license coverage for the example of FIGURE 6, shows that Version 3.0 has a single installation that is covered by downgrade coverage from an unconsumed base license for Version 6.0. Since there is a Version 6.0 license available to provide downgrade coverage, Version 1.0 does not have any unlicensed installs, as indicated in column 670 of FIGURE 6. Further, because an unconsumed Version 6.0 license covers the single installation of Version 3.0, the single install of Version 3.0 is deducted from the available Version 6.0 licenses when determining the number of unused licenses, as indicated in column 660 of FIGURE 6. Similarly, the two (2) installations of Version 4.0 are covered by downgrade coverage from unconsumed licenses for Version 6.0. This downgrade coverage ensures that there are no unlicensed installs for Version 4.0, as shown in column 670 of FIGURE 6, and since unconsumed Version 6.0 licenses cover these installations, the Version 4.0 installs (shown in column 640 of FIGURE 6) are deducted from the available Version 6.0 licenses when determining the number of unused licenses shown in column 660 of FIGURE 6. Thus, the information in FIGURE 7 explains the application of downgrade coverage using unconsumed Version 6.0 licenses to ensure compliance, which is why Versions 3.0 and 4.0 show no unlicensed installs in column 670 even though there are no specific licenses for those versions. FIGURE 7 also explains why there are only 20 of the original 23 licenses for Version 6.0 unused, as shown in column 660, even though there are no Version 6.0 licenses consumed (column 655) or installed (column 640).

FIGURE 7 further explains that the installs for Version 5.0 and Version 7.0 are covered by unconsumed licenses for those specific versions. Additionally, Version 5.0 has five (5) consumed licenses (column 655) that do not cover the installed product version. FIGURE 7 explains that the installation of product Version 5.0 is covered by an unconsumed license for Version 5.0, and that five (5) Version 5.0 user-based licenses are also being consumed. This optional indication of user versus machine-based licenses allows for an analysis of whether there are unnecessary consumptions, such that additional licenses might be available. Only a single user-based license is needed for any one user, allowing the user to use the product version on any machine. Similarly, if a user has been granted a user-based license while already having access to a licensed product through a machine-based license, one of those licenses may be available for allocation to another user. If multiple licenses having overlapping coverage are detected, then a flag or notification may be provided so that an analysis can determine whether some license consumption is not required for compliance and additional licenses may be freed up.

In the example relating to Version 5.0 shown in FIGURE 7, it has been noted that four (4) user-based licenses are being used by the administrator, and at least some of this consumption is not required since a single such license is adequate for coverage. Furthermore, a user has consumed a user-based license when it was not required, perhaps because that user was using the installed product version covered by a machine-based license. Thus, the details shown in FIGURE 7 provide additional information for interpreting the example of FIGURE 6.

Once a comparison of actual usage to available licenses has been made as in FIGURE 6 above, compliance may be determined. If there are no unlicensed installs, as indicated in column 670, for a particular version of a product, then that version is in compliance. On the other hand, if there are unlicensed installs for a particular version of a product, then additional licenses will need to be acquired and/or specific installations will need to be removed to ensure compliance. Thus, version compliance may be used to manage product version acquisition for achieving or maintaining compliance with the terms of the various licenses.

If an enterprise fully integrates an entitlement coordination framework with a consumption method version compliance system, such that all product version installations arc accounted for by corresponding consumed licenses (as would typically be the case after an initial transition period is completed, once installations have been fully coordinated with corresponding license consumption), then the entitlement coordination system generally should be able to maintain compliance equilibrium. At that point, license consumption data has been updated to ensure that any installations have a corresponding consumed license. Once such a coordinated balance is achieved, the joint system should automatically ensure that any future installations are covered by a consumed license so long as all product version installations take place through the entitlement coordination system, since users are generally only allowed to install products by consuming a license from the central pool of the enterprise's entitlement coordination framework. This should ensure continued compliance.

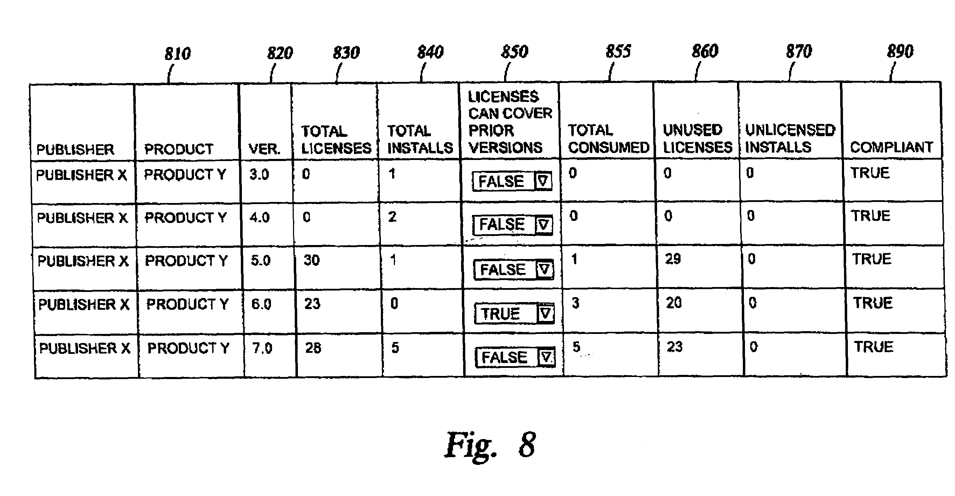

**FIGURE 8** provides an example of the consumption method of compliance comparison when product version installations are all properly accounted for within an integrated entitlement coordination framework such that for each installation, there is a corresponding consumption. While the example of FIGURE 8 considers both consumptions and installations, it could alternatively determine compliance based on license consumption alone so long as all installations are governed by a balanced entitlement coordination framework. In format, FIGURE 8 is similar to FIGURE 6, with column 814 indicating the product at issue, column 820 indicating the version of the product, column 830 indicating the total number of base licenses available for a product version (which may be based on the application of upgrades to underlying base licenses using a rollup procedure to determine the ultimate number of base licenses available for a particular version), column 840 indicating the number of a product version installed on the enterprise's computer system, column 850 indicating whether or not a license provides downgrade coverage, column 855 indicating the total number of licenses to a product version consumed using the integrated entitlement coordination framework, column 860 indicating the number of unused licenses, column 870 indicating the number of unlicensed installs, and column 890 indicating whether a product version is in compliance.

When all product version installations take place wholly through an entitlement coordination framework, as in this example, compliance should automatically be maintained because users will not be entitled to install a product version unless there are licenses available within the pool to cover the installation. If a user attempts to use a product available through the entitlement coordination framework when there are no available licenses in the pool, the entitlement framework will prevent installation. In such a case, installation is only allowed if a license becomes available, either through purchase of an additional license or through revocation of some other user's installation to add back into the central pool. In this way, the balanced and integrated system would maintain compliance. Furthermore, in such a fully balanced and integrated system, the number of installs shown in column 840 generally should match the number of licenses consumed shown in column 855 since no product versions would be installed except by consuming a license. Of course, downgrade coverage may again factor in, as described above. In the example of FIGURE 8, the installs for Version 3.0 and Version 4.0 are covered by consumed licenses for Version 6.0, which is indicated in column 855 as three (3) consumed licenses for Version 6.0. The use of a rollup procedure may further ensure that the central pool of available product version base licenses is updated to take into account any upgrades, so that both the pool of available licenses and compliance would be based on the ultimate number of available base licenses for product versions. A detailed license coverage format page (similar to that shown in FIGURE 7) could also be employed to specifically show which consumed licenses cover particular product version installations.

Once a comparison of actual usage to available licenses has been made, compliance may be determined. If there are no unlicensed installs shown in column 870 for a particular version of a product, then that version is in compliance. In other words, there is version compliance if each installation and each consumed license not associated with an installation is covered by a base license. On the other hand, if there are unlicensed installs for a particular version of a product, then additional licenses will need to be acquired and/or specific installations will need to be removed to ensure compliance. In a fully integrated consumption version compliance system, used with an entitlement coordination framework, compliance should generally be maintained automatically so long as there are no unauthorized installations taking place outside of the entitlement coordination framework.

As a possible additional benefit, an integrated system with both a version compliance system and an entitlement coordination framework may allow the system administrator to allocate specific versions to specific users and/or to allow users to have the option to consume any of a variety of versions of a product from the central pool. By way of example, version allocation could be set as "one", meaning that a user would only be entitled to a specific version; "latest", meaning a user will always see the latest version available, regardless of which version they are specifically allocated; "earlier", meaning a user will be able to choose between the version they were allocated and any previous versions available; and "later", meaning that a user will be able to choose between the version they were allocated and any subsequent versions available. By way of example, FIGURES 2A and 2B allow for version allocation of this sort to be set as license information input in block 230. In this way, the administrator may use the entitlement coordination system to provide version options to users, while the integrated version compliance system ensures that users only have access to available product versions within the central pool. As users consume specific versions from the pool of available product versions under license, the tally of available product versions is adjusted accordingly to prevent consumption in excess of the enterprise's licenses.

Thus, a version compliance system may be used independently to determine whether an enterprise is compliant. In such a stand-alone system, version compliance may be checked by comparing license information to information on actual usage (typically based on inventory results reporting the number of product versions installed throughout the enterprise's computer system). Alternatively, a version compliance system may be used in conjunction with an entitlement coordination framework to manage installation and use of product versions and to achieve and maintain compliance by taking consumption into account. Regardless, downgrade coverage and/or a rollup procedure may be useful when determining compliance.

While various embodiments in accordance with the principles disclosed herein have been shown and described above, modifications thereof may be made by one skilled in the art without departing from the spirit and the teachings of the disclosure. The embodiments described herein are representative only and are not intended to be limiting. Many variations, combinations, and modifications are possible and are within the scope of the disclosure. Accordingly, the scope of protection is not limited by the description set out above, but is defined by the claims which follow, that scope including all equivalents of the subject matter of the claims. Furthermore, any advantages and features described above may relate to specific embodiments, but shall not limit the application of such issued claims to processes and structures accomplishing any or all of the above advantages or having any or all of the above features.

Additionally, the section headings used herein are provided for consistency with the suggestions under 37 C.F.R. 1.77 or to otherwise provide organizational cues. These headings shall not limit or characterize the invention(s) set out in any claims that may issue from this disclosure. Specifically and by way of example, although the headings refer to a "Field of the Invention," the claims should not be limited by the language chosen under this heading to describe the so-called field. Further, a description of a technology in the "Background" is not to be construed as an admission that certain technology is prior art to any invention(s) in this disclosure. Neither is the "Summary" to be considered as a limiting characterization of the invention(s) set forth in issued claims. Furthermore, any reference in this disclosure to "invention" in the singular should not be used to argue that there is only a single point of novelty in this disclosure. Multiple inventions may be set forth according to the limitations of the multiple claims issuing from this disclosure, and such claims accordingly define the invention(s), and their equivalents, that are protected thereby. In all instances, the scope of the claims shall be considered on their own merits in light of this disclosure, but should not be constrained by the headings set forth herein.

## Claims

1. A method for checking version compliance comprising:
collecting licensing information regarding product versions available to an enterprise under license;
collecting information regarding actual usage of product versions within the enterprise; and
comparing actual usage information to licensing information to determine compliance;
wherein the licensing information comprises the number of each product version available under license; and
wherein the enterprise is in compliance if each instance of actual usage of a product version is covered by a base license.

2. A method as in claim 1, wherein:
the actual usage information comprises the number of installations of product versions within the enterprise and the number of licenses consumed within an entitlement coordination framework for the enterprise; and
the enterprise is in compliance if each installation and each consumed license not associated with an installation is covered by a base license.

3. A method as in claim 1, wherein the licensing information further comprises information concerning whether each base license provides downgrade coverage, the method further comprising using an available base license with downgrade coverage to cover usage of a prior version if necessary to achieve compliance.

4. A method as in claim 3, wherein:
the actual usage information comprises the number of installations of product versions within the enterprise and the number of licenses consumed within an entitlement coordination framework for the enterprise; and
the enterprise is in compliance if each installation and each consumed license not associated with an installation is covered by a base license.

5. A method as in claim 1, wherein the licensing information further comprises license attribute information indicating if a license is an upgrade, the method further comprising:
aggregating all base licenses and upgrades relating to each product version; and
applying each upgrade for each product version to a prior version base license.

6. A method as in claim 5, wherein upgrades are applied to the lowest prior version base license available, starting from the lowest version upgrade up to the highest version upgrade.

7. A method as in claim 6, wherein:
the actual usage information comprises the number of installations of product versions within the enterprise and the number of licenses consumed within an entitlement coordination framework for the enterprise; and
the enterprise is in compliance if each installation and each consumed license not associated with an installation is covered by a base license.

8. A method as in claim 6, wherein the licensing information further comprises information concerning whether each base license provides downgrade coverage, the method further comprising using an available base license with downgrade coverage to cover usage of a prior version if necessary to achieve compliance.

9. A method as in claim 8, wherein the licensing information further comprises designation of each license as machine or user-based, the method further comprising:
checking for overlapping licenses;
wherein two or more user-based licenses for a single user would overlap.

10. A method as in claim 8, wherein:
the actual usage information comprises the number of installations of product versions within the enterprise and the number of licenses consumed within an entitlement coordination framework for the enterprise; and
the enterprise is in compliance if each installation and each consumed license not associated with an installation is covered by a base license.

11. A method as in claim 10, wherein the licensing information further comprises designation of each license as machine or user-based, the method further comprising:
checking for overlapping licenses;
wherein two or more user-based licenses for a single user would overlap.

12. A computer readable media containing instructions for a processor to implement steps comprising:
collecting licensing information regarding product versions available to an enterprise under license;
collecting information regarding actual usage of product versions within the enterprise; and
comparing actual usage information to licensing information to determine compliance;
wherein the licensing information comprises the number of each product version available under license; and
wherein the enterprise is in compliance if each instance of actual usage of a product version is covered by a base license.

13. A computer readable media as in claim 12, wherein the licensing information further comprises information concerning whether each base license provides downgrade coverage, the computer readable media further comprising the step of using an available base license with downgrade coverage to cover usage of a prior version if necessary to achieve compliance.

14. A computer readable media as in claim 12, wherein:
the actual usage information comprises the number of installations of product versions within the enterprise and the number of licenses consumed within an entitlement coordination framework for the enterprise; and
the enterprise is in compliance if each installation and each consumed license not associated with an installation is covered by a base license.

15. A computer readable media as in claim 12, wherein the licensing information further comprises license attribute information indicating if a license is an upgrade, the computer readable media further comprising the steps of:
aggregating all base licenses and upgrades relating to each product version; and
applying each upgrade for each product version to a prior version base license;
wherein upgrades are applied to the lowest prior version base license available, starting from the lowest version upgrade up to the highest version upgrade.

16. A computer readable media as in claim 12, wherein the licensing information further comprises designation of each license as machine or user-based, the computer readable media further comprising the step of:
checking for overlapping licenses;
wherein two or more user-based licenses for a single user would overlap.

17. A device comprising:
a version compliance system operable to check compliance by comparing actual usage of product versions in an enterprise to licensing information regarding product versions available to the enterprise under license; and
an entitlement coordination framework operable to install product versions for actual usage in the enterprise via license consumption;
wherein:
the licensing information comprises the number of each product version available under license;
actual usage information comprises the number of installations of product versions within the enterprise and the number of licenses consumed within the entitlement coordination framework for the enterprise; and
the enterprise is in compliance if each installation and each consumed license not associated with an installation is covered by a base license.

18. A device as in claim 17, wherein the version compliance system comprises a rollup procedure operable to apply upgrades to prior version base licenses.

19. A device as in claim 17, wherein the licensing information further comprises information concerning whether each base license provides downgrade coverage, wherein the version compliance system is operable to use an available base license with downgrade coverage to cover usage of a prior version if necessary to achieve compliance.

20. A device as in claim 19, wherein the version compliance system comprises a rollup procedure operable to apply upgrades to prior version base licenses.
